# FASCICULE DE BREVET EUROPEEN

(11) **EP 1 249 058 B1**
(45) Date de publication et mention de la délivrance du brevet: **24.03.2004**
(21) Numéro de dépôt: 00988856.1
(22) Date de dépôt: 20.11.2000
(51) Int. Cl.: H02G 9/10

(54) **PROCEDE DE GESTION D'UNE EXTREMITE D'INFRASTRUCTURE MULTITUBULAIRE**
MANAGEMENTVERFAHREN FÜR DIE ENDEN EINER MULTITUBULAREN INFRASTRUKTUR
METHOD FOR MANAGING ONE END OF A MULTITUBE INFRASTRUCTURE

(30) Priorité: 22.11.1999 FR 9914671
(43) Date de publication de la demande: 16.10.2002
(73) Titulaire: FRANCE TELECOM, 75015 Paris (FR)
(72) Inventeur: MIGNON, Pierre, F-22700 Perros Guirec (FR); CRESPEL, Daniel, F-22300 Lannion (FR)
(74) Mandataire: Bentz, Jean-Paul
(86) Numéro de dépôt international: PCT/FR2000/003222
(87) Numéro de publication internationale: WO 2001/039343

(56) Documents cités:
- EP-A- 0 582 744
- WO-A-97/26574
- DE-A- 3 112 078
- DE-A- 4 315 275
- FR-A- 2 791 189
- US-A- 4 411 491
- US-A- 5 125 056
- US-A- 5 242 315

## Description

L'invention se rapporte à un procédé de gestion d'une extrémité d'infrastructure multitubulaire dans laquelle les tubes sont susceptibles d'avoir des diamètres différents et ont une extrémité libre en attente de raccord et/ou de pose de câbles.

Le domaine de l'invention est celui d'un réseau câblé de télécommunications, d'énergie, d'éclairage ou de signalisation.

Nous décrirons plus particulièrement un réseau câblé de télécommunications, qui regroupe lui-même plusieurs types de réseaux auxquels correspondent différentes morphologies d'infrastructures. On distingue :
- les réseaux d'interconnexion qui relient des réseaux d'opérateurs de télécommunications distincts. Les liaisons entre ces réseaux empruntent des conduites souterraines exploitées en commun.
- les réseaux de transmission appartenant à un ou plusieurs opérateurs et comprenant des noeuds appelés centraux de télécommunications. Les transmissions sont parfois effectuées par voie hertzienne mais devant la quantité, la confidentialité et la sécurisation des informations à transmettre, les transmissions par câbles notamment les câbles à fibres optiques leur sont souvent préférés. Différents types de câbles sont utilisés pour ces transmissions : les câbles aériens qui n'offrent pas toujours un degré de sécurité suffisant pour un opérateur exposant ainsi son infrastructure, les câbles sous-marins ou sous-fluviaux dont la pose est très coûteuse et qui ne sont employés qu'en cas de nécessité ou enfin, les câbles souterrains et les câbles d'immeubles.
- le réseau de distribution, appelé aussi « boucle locale » et qui désigne la partie du réseau située entre un central de télécommunications et le client. Dans le cas d'un milieu rural, la faible densité de population permet d'optimiser les investissements en utilisant des câbles aériens, ou des moyens de transmission sans fil par transmission hertzienne, radio ou satellite. Inversement en milieu urbain, la densité de population favorise l'emploi de conduites souterraines. Le dimensionnement de ces réseaux varie selon les opérateurs mais la topologie reste identique : un ensemble de chambres d'accès souterraines ou sur chaussée, généralement reliées par des conduites souterraines. Cette topologie offre une protection aux câbles, et facilite leur mise en place. Elle permet également d'accéder ou d'intervenir ultérieurement sur les câbles en fonction de l'évolution du réseau pouvant nécessiter la dépose des câbles. Dans le cas de France Télécom, ce réseau est le plus souvent constitué de chambres reliées par des conduites de diamètre inférieur à 80 mm, disposées en groupe sur des distances pouvant varier de quelques mètres jusqu'à 300 m.
- les réseaux privés de télécommunications que des entreprises, des collectivités locales ou autres entités installent afin de favoriser l'échange d'informations internes indépendamment de l'opérateur. Cette exploitation permet de partager les ressources à moindre coût. Dans certains cas, la multiplicité des bâtiments d'une entreprise implique des liaisons extérieures aux bâtiments. Si ces bâtiments sont localisés sur un même site, la morphologie de l'infrastructure peut être semblable à celle du réseau de distribution décrit ci-dessus. Si les sites sont distants, l'entreprise fait appel à un opérateur de télécommunications pour utiliser son réseau. Dans ce cas les informations transitent par un réseau de distribution puis par un réseau de transmission.

Différentes morphologies d'infrastructure peuvent donc être envisagées selon le réseau considéré et la solution retenue : les câbles peuvent être placés en pleine terre ou non, noyés ou non dans du béton ou du bitume, posés en conduites souterraines voire sous-marines ou sous-fluviales, fixés à des appuis aériens reposant sur des poteaux, des parois, etc. L'invention s'applique de façon générale à toute infrastructure multitubulaire et plus particulièrement dans le cas où l'infrastructure est une infrastructure souterraine.

On va rappeler dans ce qui suit, un certain nombre de définitions qui vont permettre de mieux comprendre et de mieux situer le domaine de l'invention.
On entend par câble l'ensemble constitué d'un ou plusieurs fils métalliques ou fibres optiques protégés par une gaine ou enveloppe. Il existe plusieurs structures de câbles qu'il s'agisse de câbles électriques ou de câbles optiques.

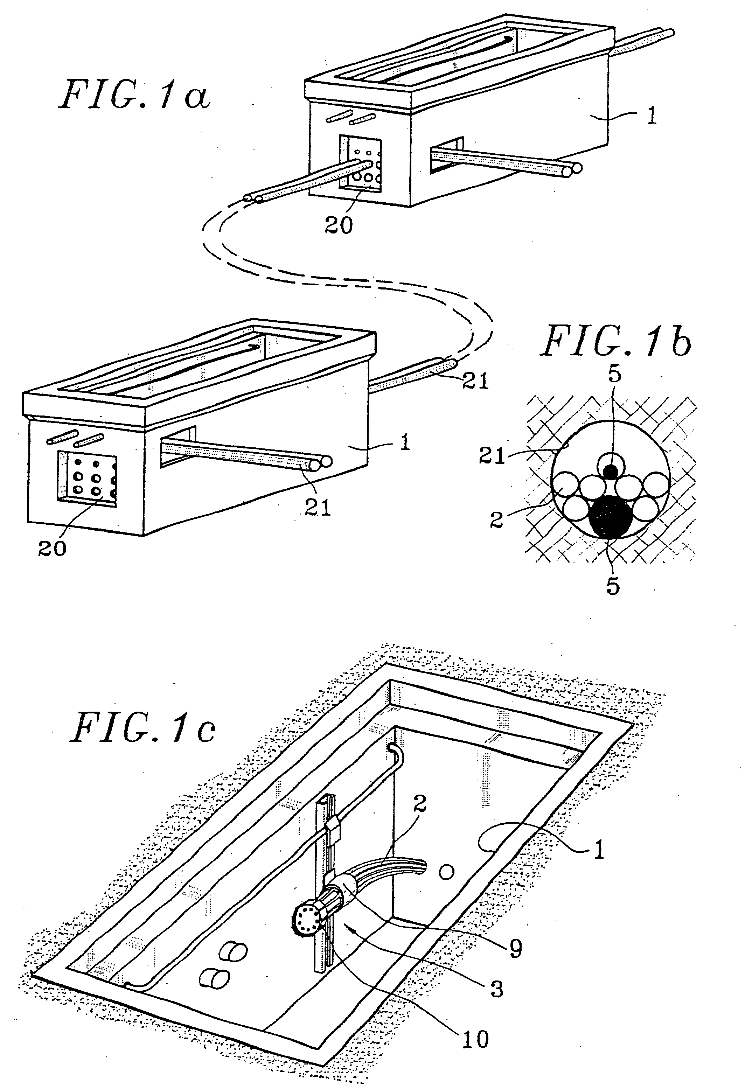

Parmi les câbles optiques citons le câble comprenant un groupe de 4 à 10 modules de 6 à 24 fibres optiques, le diamètre de ce type de câble atteignant jusqu'à présent 18 mm, et le microcâble pouvant contenir jusqu'à 24 fibres optiques éventuellement regroupées en modules et dont le diamètre varie entre 1,5 à 6,5 mm, ce qui correspond à une réduction de diamètre par un facteur 3.
Comme illustré par la figure 1 b), dans certains cas, les câbles 5 sont posés librement dans des conduites 21, dans d'autres cas il sont abrités par, un ou plusieurs tubes 2 d'une rigidité supérieure à celle des câbles 5.
La réduction des coûts associée à la miniaturisation des diamètres des câbles permet d'envisager la pose dans les conduites d'une pluralité de petits tubes. Dans le cas des réseaux de distribution, le diamètre de ces tubes varie de 5 à 18 mm et ils sont fabriqués dans des matériaux comme le polychlorure de vinyle (PVC), le polyéthylène (PE) ou le polypropylène (PP).

On entend par chambre d'accès ou chambre de tirage, un espace auquel aboutissent et /ou d'où partent les câbles et/ou les tubes. Ces chambres d'accès peuvent être préfabriquées ou construites in situ. Elles sont souvent placées sous les trottoirs et fabriquées en béton armé. Dans ces chambres d'accès, les câbles sont raccordés à des éléments assurant leur continuité, protégeant leur extrémité ou plus généralement permettant de les traiter.

La rigidité des tubes fabriqués par exemple en PVC est favorable à la pose d'un tube en pleine terre, noyé dans du béton, ou en conduite et garantit que les caractéristiques dimensionnelles du tube seront préservées.

Dans certaines situations provisoires les tubes présentent une extrémité libre plus ou moins longue. Ainsi on peut se trouver en présence d'une arrivée de plusieurs tubes ayant une extrémité libre, ces tubes ayant été coupés en entrée de chambre d'accès ou peu après celle-ci. Lorsque les tubes sont en attente de pose d'un ou plusieurs câbles, l'étanchéité de l'extrémité de ces tubes n'est pas assurée. De même, lorsque les câbles sont posés dans les tubes, l'étanchéité des câbles ainsi libérés du ou des tubes n'est plus assurée.

Un procédé de gestion d'une extrémité d'infrastructure multitubulaire du genre mentionné ci-dessus est décrit dans les documents US-A- 5 242 315 et US-A- 4 411 491.

La présente invention permet de remédier à cet inconvénient en proposant un procédé de gestion d'une extrémité d'infrastructure multitubulaire assurant le regroupement des extrémités des tubes ayant éventuellement des diamètres différents au moyen d'une interface de regroupement étanche. Les tubes peuvent être en attente de pose de câbles. Lorsque les câbles sont posés, ils peuvent alors être raccordés à tout autre élément.

Selon l'invention, le procédé de gestion d'une extrémité d'infrastructure multitubulaire dans laquelle les tubes sont susceptibles d'avoir des diamètres différents et ont une extrémité libre, consiste à regrouper l'extrémité des tubes au moyen d'une interface de regroupement comprenant un élément de traitement collectif d'étanchéité des extrémités.

Selon une caractéristique de l'invention, le procédé consiste à placer dans l'interface de regroupement un élément de traitement collectif d'étanchéité susceptible d'être transpercé lors du passage des câbles et éventuellement à utiliser comme élément d'étanchéité, une membrane en élastomère.

Selon une autre caractéristique, le procédé consiste à placer dans l'interface de regroupement un élément de maintien en position des tubes comprenant des conduits de diamètre adapté à celui des tubes pour leur maintien collectif. Les conduits peuvent être situés en périphérie de l'élément de maintien en position des tubes et éventuellement serrés par une bride.

Selon une autre caractéristique de l'invention, lorsque les câbles sont posés dans les tubes, ils peuvent être rassemblés au moyen d'un élément de transition à effet d'entonnoir.

L'invention propose également un dispositif d'extrémité d'infrastructure multitubulaire dans laquelle les tubes sont susceptibles d'avoir des diamètres différents et ont une extrémité libre, principalement caractérisé en ce qu'il comprend une interface de regroupement assurant un regroupement des tubes et un traitement collectif d'étanchéité en extrémité des tubes.

Selon une autre caractéristique de l'invention, l'interface de regroupement des tubes comprend une membrane en élastomère pour assurer l'étanchéité des extrémités.

L'interface de regroupement des tubes est avantageusement constitué d'un élément de maintien en position des tubes comprenant des conduits qui peuvent être situés en périphérie de l'élément de maintien en position des tubes. Une bride peut alors serrer les tubes.

L'élément d'assemblage des tubes peut comprendre un élément de transition à effet d'entonnoir.

D'autres particularités et avantages de l'invention apparaîtront clairement à la lecture de la description faite à titre d'exemple non limitatif et en regard des dessins annexés sur lesquels :
- la figure 1 a) représente une vue schématique d'une infrastructure souterraine,
- la figure 1 b) représente une vue en coupe d'une conduite,
- la figure 1 c) représente une chambre d'accès vue de dessus,
- la figure 2 a) représente une vue de profil de l'interface de regroupement selon l'invention,

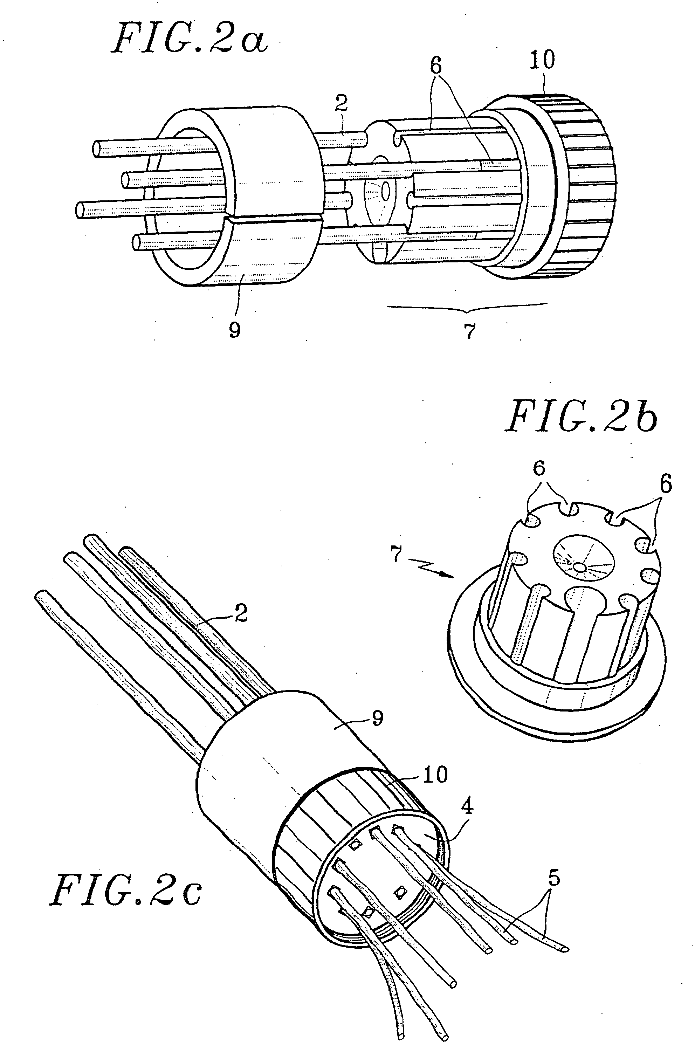

- la figure 2 b) représente un schéma de l'élément de maintien en position des tubes,
- la figure 2 c) représente une vue en perspective de l'interface de regroupement,

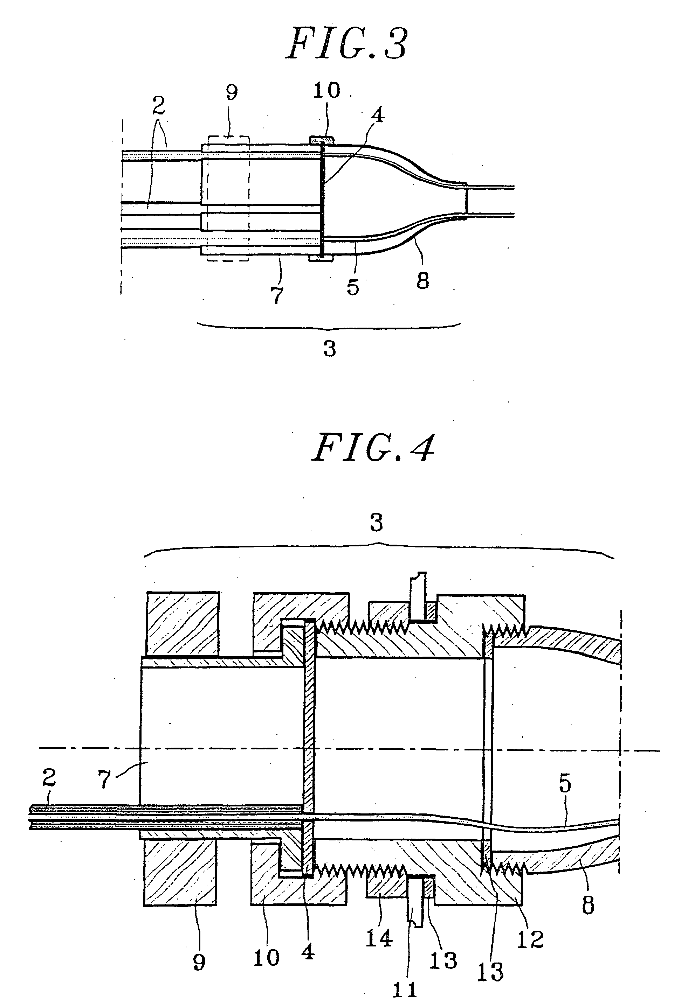

- la figure 3 représente un schéma de l'interface de regroupement dans un deuxième mode de réalisation,
- la figure 4 représente un schéma détaillé de l'interface de regroupement traversant la paroi d'un regard.

La description qui suit est faite à titre d'exemple dans le cadre d'une infrastructure souterraine représentée sur la figure 1 a). L'infrastructure est composée de chambres d'accès 1 reliées entre elles par des conduites 21. Ces conduites 21 arrivent sur la façade d'une chambre d'accès 1 au niveau d'un masque 20. Les chambres d'accès 1 peuvent comporter plusieurs masques.

La figure 1 b) déjà décrite représente donc une conduite 21 contenant un gros câble 5, des tubes 2 protégeant des câbles 5 plus petits. Une conduite 21 peut également contenir des minitubes protégeant des microcâbles ou ne contenir qu'un de ces éléments.

Selon la figure 1 c), les tubes 2 arrivant dans la chambre d'accès 1 sont introduits dans l'interface de regroupement 3 et maintenus en position par l'interface de regroupement 3 qui peut éventuellement être elle-même fixée dans une zone de la chambre d'accès 1 par tout élément de fixation voire même par une bride 9 dont une autre fonction sera décrite plus loin. L'élément 10 est un écrou de montage.

L'interface de regroupement 3 peut selon un autre mode de réalisation être placé au niveau du masque 20 de la chambre d'accès 1 ou d'un regard 11 représenté figure 4. On va maintenant décrire plus en détail l'interface de regroupement 3 à partir des schémas représentés sur les figures 2a), 2b) et 2c) en s'y référant indistinctement. Afin d'éviter l'introduction de poussières, d'eau ou de boue sur la partie frontale de l'interface de regroupement, un élément de traitement collectif d'étanchéité 4 est placé en extrémité de l'interface de regroupement sur sa face avant ( figure 2 c)). Cet élément 4 obture les extrémités des tubes 2 lorsqu'ils sont en attente de pose de câbles 5 ou, lorsque les câbles 5 sont posés, assure un passage étanche des câbles 5 issus des tubes 2. Cet élément d'étanchéité 4 peut comporter une membrane en élastomère dont la découpe, la désoperculation ou la perforation est facile à réaliser avec un poinçon ou directement avec les câbles 5, au fur et à mesure de la pose des câbles 5. L'épaisseur de cette membrane peut varier jusqu'à devenir un élément volumineux. En arrivant dans l'interface de regroupement (figure 2 a), les tubes 2 sont introduits dans un élément de maintien en position des tubes 7 de l'interface de regroupement. L'élément de maintien en position des tubes 7 peut simplement être constitué de la bride 9 ou de tout autre élément de serrage. Selon un mode de réalisation avantageux, l'élément de maintien en position des tubes 7 comprend des conduits 6 (figure 2 b) dans lesquels les tubes 2 sont introduits. Leur maintien peut être renforcé par collage par exemple. Les conduits 6 peuvent être ouverts partiellement sur leur longueur comme représenté sur la figure 2 b); le maintien des tubes 2 peut alors être renforcé par la bride 9 ou tout autre élément de serrage. Les conduits 6 peuvent être de diamètres différents et l'interface de regroupement peut typiquement maintenir 8 tubes de 8 mm de diamètre et un tube de 14 mm de diamètre. L'extrémité des tubes 2 aboutit au niveau de l'élément de maintien en position des tubes 7 de l'interface de regroupement libérant ainsi les câbles 5 côté face avant de ladite interface. Certains tubes 2 peuvent être en attente de pose de câbles 5, d'autres peuvent en abriter un ou plusieurs. Comme représenté sur la figure 3, l'interface de regroupement 3 peut comprendre également un élément de transition 8 par exemple de forme tronconique de manière à resserrer les câbles 5 afin de faciliter leur gestion et leur introduction dans tout autre élément grâce à l'effet entonnoir.
Nous allons à présent considérer un mode de réalisation particulier représenté sur la figure 4. Dans le cas de l'exploitation de tubes 2 en pleine terre, il est intéressant de placer l'interface de regroupement au niveau du masque 20 d'une chambre d'accès 1 (représentés figure 1) ou de la paroi d'un regard 11 ou de celle de tout autre volume enterré. Selon la figure 4, l'interface de regroupement 3 traverse la paroi du regard 11. Les câbles 5 issus des tubes 2 traversent le moyen de traitement collectif d'étanchéité 4 et sont éventuellement regroupés dans l'élément de transition 8. La bride 9 assure le serrage des tubes 2 au niveau de l'élément 7 de maintien en position des tubes 2. Un écrou 10 permet d'assurer le montage de l'élément 7 de maintien en position des tubes sur une embase 12. L'embase 12 traverse la paroi du regard 11, des joints 13 assurant l'étanchéité du regard 11. Un écrou de fixation 14 permet l'assemblage de l'interface de regroupement 3 à la paroi du regard 11.
D'autres variantes de réalisation peuvent être envisagées pour placer l'interface de regroupement 3 sur la paroi d'un volume dont on souhaite préserver l'étanchéité par rapport au milieu dans lequel ce volume est situé.

## Revendications

1. Procédé de gestion d'une extrémité d'infrastructure multitubulaire dans laquelle les tubes (2) sont susceptibles d'avoir des diamètres différents et ont une extrémité libre, **caractérisé en ce qu'**il consiste à regrouper l'extrémité desdits tubes (2) au moyen d'une interface de regroupement (3) comprenant un élément de traitement collectif d'étanchéité (4) desdites extrémités.

2. Procédé selon la revendication 1, **caractérisé en ce qu'**il consiste à placer dans l'interface dé regroupement (3) un élément de traitement collectif d'étanchéité (4) susceptible d'être transpercé lors du passage de câbles (5) dans les tubes (2).

3. Procédé selon la revendication 2, **caractérisé en ce qu'**il consiste à utiliser comme élément de traitement collectif d'étanchéité (4) une membrane en élastomère.

4. Procédé selon l'une des revendications 1 à 3, **caractérisé en ce qu'**il consiste à placer dans l'interface de regroupement (3) un élément de maintien en position des tubes (7).

5. Procédé selon la revendication 4, **caractérisé en ce que** l'élément de maintien en position des tubes (7) comprend des conduits (6) de diamètre adapté à celui des tubes (2) pour le maintien collectif desdits tubes (2).

6. Procédé selon la revendication 5, **caractérisé en ce qu'**il consiste à disposer les conduits (6) en périphérie de l'élément de maintien en position des tubes (7).

7. Procédé selon la revendication 6, **caractérisé en ce qu'**il consiste à serrer par une bride (9) les tubes (2) disposés dans les conduits (6).

8. Procédé selon l'une des revendications 1 à 7, **caractérisé en ce que**, lorsque des câbles (5) sont posés dans les tubes (2), il consiste à rassembler lesdits câbles (5) au moyen d'un élément de transition (8) à effet d'entonnoir.

9. Dispositif d'extrémité d'infrastructure multitubulaire dans laquelle les tubes (2) sont susceptibles d'avoir des diamètres différents et ont une extrémité libre, **caractérisé en ce qu'**il comprend une interface de regroupement (3) assurant un regroupement et un traitement collectif d'étanchéité en extrémité desdits tubes (2).

10. Dispositif selon la revendication 9, **caractérisé en ce que** l'interface de regroupement (3) des tubes (2) comprend une membrane en élastomère pour assurer l'étanchéité en extrémité des tubes (2).

11. Dispositif selon l'une des revendications 9 ou 10, **caractérisé en ce que** l'interface de regroupement (3) comprend un élément de maintien en position des tubes (7).

12. Dispositif selon la revendication 11, **caractérisé en ce que** l'élément de maintien en position des tubes (7) comprend des conduits (6) de diamètres différents pour le maintien desdits tubes (2).

13. Dispositif selon la revendication 12, **caractérisé en ce que** les conduits (6) sont situés en périphérie de l'élément de maintien en position des tubes (7).

14. Dispositif selon la revendication 13, **caractérisé en ce qu'**il comprend une bride (9) pour serrer les tubes (7) maintenus dans les conduits (6).

15. Dispositif selon l'une des revendications 9 à 14, **caractérisé en ce que** l'interface de regroupement (3) comprend un élément de transition (8) à effet d'entonnoir.

## Patentansprüche

1. Verfahren zur Verwaltung eines Endstückes eines mehrröhrigen Unterbaus, in dem die Röhren (2) verschiedene Durchmesser haben können und ein freies Ende aufweisen, **dadurch gekennzeichnet, dass** es darin besteht, das Endstück der Röhren (2) mittels einer Zusammenfassungsschnittstelle (3), die ein Element (4) zur gemeinsamen Abdichtung der Enden umfasst, zusammenzufassen.

2. Verfahren nach Anspruch 1, **dadurch gekennzeichnet, dass** es darin besteht, in die Zusammenfassungsschnittstelle (3) ein Element (4) zur gemeinsamen Abdichtung anzuordnen, das bei der Einführung von Kabeln (5) in die Röhren (2) durchbohrt werden kann.

3. Verfahren nach Anspruch 2, **dadurch gekennzeichnet, dass** es darin besteht, als Element (4) zur gemeinsamen Abdichtung eine Elastomermembrane zu verwenden.

4. Verfahren nach einem der Ansprüche 1 bis 3, **dadurch gekennzeichnet, dass** es darin besteht, in der Zusammenfassungsschnittstelle (3) ein Element (7) für die Lagestabilität der Röhren anzuordnen.

5. Verfahren nach Anspruch 4, **dadurch gekennzeichnet, dass** das Element (7) für die Lagestabilität der Röhren Rinnen (6) mit einem Durchmesser umfasst, der für die gemeinsame Stabilität der Röhren dem Durchmesser der Röhren (2) angepasst ist.

6. Verfahren nach Anspruch 5, **dadurch gekennzeichnet, dass** es darin besteht, die Rinnen (6) in dem Randbereich des Elements (7) für die Lagestabilität der Röhren anzuordnen.

7. Verfahren nach Anspruch 6, **dadurch gekennzeichnet, dass** es darin besteht, die in den Rinnen (6) angeordneten Röhren (2) mit einer Schelle (9) zu umklammern.

8. Verfahren nach einem der Ansprüche 1 bis 7, **dadurch gekennzeichnet, dass** es darin besteht, wenn Kabel (5) in den Röhren (2) verlegt werden, die Kabel (5) mittels eines Übergangselements (8) mit Trichterwirkung zusammenzuführen.

9. Endvorrichtung eines mehrröhrigen Unterbaus, wobei die Röhren (2) verschiedene Durchmesser haben können und ein freies Ende aufweisen, **dadurch gekennzeichnet, dass** sie eine Zusammenfassungsschnittstelle (3) umfasst, die eine Zusammenfassung und eine gemeinsame Abdichtung an dem Ende der Röhren (2) sicherstellt.

10. Vorrichtung nach Anspruch 9, **dadurch gekennzeichnet, dass** die Zusammenfassungsschnittstelle (3) der Röhren (2) eine Elastomermembrane umfasst, um die Dichtigkeit an dem Ende der Röhren (2) sicherzustellen.

11. Vorrichtung nach einem der Ansprüche 9 oder 10, **dadurch gekennzeichnet, dass** die Zusammenfassungsschnittstelle (3) ein Element (7) für die Lagestabilität der Röhren umfasst.

12. Vorrichtung nach Anspruch 11, **dadurch gekennzeichnet, dass** das Element (7) für die Lagestabilität der Röhren Rinnen (6) mit verschiedenen Durchmessern für die Stabilität der Röhren (2) umfasst.

13. Vorrichtung nach Anspruch 12, **dadurch gekennzeichnet, dass** die Rinnen (6) sich in dem Randbereich des Elements (7) für die Lagestabilität der Röhren befinden.

14. Vorrichtung nach Anspruch 13, **dadurch gekennzeichnet, dass** sie eine Schelle (9) umfasst, um die in den Rinnen (6) stabilisierten Röhren (2) zu umklammern.

15. Vorrichtung nach einem der Ansprüche 9 bis 14, **dadurch gekennzeichnet, dass** die Zusammenfassungsschnittstelle (3) ein Übergangselement (8) mit Trichterwirkung umfasst.

## Claims

1. Method of managing an end of a multi-tubular infrastructure in which the tubes (2) are likely to have differing diameters and have a free end, **characterised in that** it consists in regrouping the end of the said tubes (2) by means of a regrouping interface (3) comprising a global sealing processing element (4) of the said ends.

2. Method according to claim 1, **characterised in that** it consists in placing into the regrouping interface (3) a global sealing processing element (4) likely to be pierced during the passing of the cables (5) into the tubes (2).

3. Method according to claim 2, **characterised in that** it consists in using a membrane made of elastomer as a global sealing processing element (4).

4. Method according to any of claims 1 to 3, **characterised in that** it consists in placing into the regrouping interface (3) a position retention element (7) of the tubes.

5. Method according to claim 4, **characterised in that** the position retention element (7) of the tubes comprises ducts (6) with a diameter adapted to that of the tubes (2) to globally retain the said tubes (2).

6. Method according to claim 5, **characterised in that** it consists in placing the ducts (6) on the periphery of the position retention element (7) of the tubes.

7. Method according to claim 6, **characterised in that** it consists in tightening via a cramp (9) the tubes (2) placed inside the ducts (6).

8. Method according to any of claims 1 to 7, **characterised in that** when the cables (5) are placed into the tubes (2), it consists in regrouping the said cables (5) by means of a funnel effect transition element (8).

9. End device of a multi-tubular infrastructure into which the tubes (2) are likely to have differing diameters and have a free end, **characterised in that** it comprises a regrouping interface (3) ensuring a regrouping and global sealing processing at the end of the said tubes (2).

10. Device according to claim 9, **characterised in that** the regrouping interface (3) of the tubes (2) comprises a membrane made of elastomer to ensure the sealing at the end of the tubes (2).

11. Device according to any of claims 9 or 10, **characterised in that** the regrouping interface (3) comprises a position retention element (7) of the tubes.

12. Device according to claim 11, **characterised in that** the position retention element (7) of the tubes comprises ducts (6) of differing diameters to retain the said tubes (2).

13. Device according to claim 12, **characterised in that** the ducts (6) are located on the periphery of the position retention element (7) of the tubes.

14. Device according to claim 13, **characterised in that** it comprises a cramp (9) to clamp the tubes (2) retained in the ducts (6).

15. Device according to any of claims 9 to 14, **characterised in that** the regrouping interface (3) comprises a funnel effect transition element (8).
